# EUROPEAN PATENT APPLICATION

(11) **EP 1 512 635 A1**
(43) Date of publication of application: **09.03.2005**
(21) Application number: 03752901.3
(22) Date of filing: 15.05.2003
(51) Int. Cl.: B65D 30/08

(54) **MULTI-BAG AND METHOD OF PRODUCING THE SAME, AND MULTI-BAG FOR BAG MAKING AND FILLING**

(30) Priority: 15.05.2002 JP 2002140776; 31.03.2003 JP 2003097346
(71) Applicant: KYORAKU CO., LTD., Kyoto-shi, Kyoto 602-0912 (JP)
(72) Inventor: TSUKANOME, Kazuhiko, Fujisawa-shi, Kanagawa 251-0042 (JP); KATO, Yoshitake, Saitama-shi, Saitama 330-0074 (JP); MATSUNAGA, Shinji, Chikushino-shi, Fukuoka 818-0062 (JP)
(74) Representative: Loven, Keith James
(86) International application number: PCT/JP2003/006044
(87) International publication number: WO 2003/097472

(57) **Abstract**

A multi-bag comprises a multi-film made by superposing at least an inner film and an outer film and sealing the cylindrically curved superposed region to form a back seal. The multi-film constituting the multi-bag is a double film formed by flattening a tube-like film into a two-layer form, with the opposite end edges, which are parallel with the direction of extrusion, continuing to each other. The multi-bag is formed in a sealed state by a back seal, a planar seal at one end, and a planar seal at the other end. The supply system for the multi-film may be such that one system is prepared for each double so as to simplify the device. Further, in the film supply process, it is possible to obtain a multi-bag of high quality without applying a shift-preventive means to between the multi-films.

## Description

### Technical Field

The present invention relates to a multiple bag, a manufacturing method of the same and a multiple bag for filling and closing a bag-making, and more particularly to a multiple bag structured by sealing a portion in which a multiple film formed by overlapping at least an inner film and an outer film is bent in a tubular shape and is overlapped, and a manufacturing method of the same and a multiple bag for filling and closing a bag-making.

### Background Art

The multiple bag structured by sealing the portion in which the multiple film formed by overlapping the inner film and the outer film is bent in a tubular shape and is overlapped is shown in Japanese Patent Application Laid-open No. 2000-185743 or Japanese Patent Application Laid-open No. 8-301296.

The multiple bag mentioned above is formed in a bag shape by discharging each of the inner film and the outer film by a carrying roll so as to overlap each other and bending them in the tubular shape. In the bag making step of the multiple bag as mentioned above, at least two systems are required as a supply system of the film. Accordingly, not only a film supply apparatus comes to a large scale, but also there is a problem that in order to prevent the multiple films from being displaced from each other in the film discharging step, there is required a complex step such as applying a partial seal between the multiple films in the film supplying step, applying a slip proofing process between the multiple films and the like.

Further, as a countermeasure for improving a pinhole resistance of the bag-making filling and closing bag having an oriented polyamide (PA) as a base material, Japanese Patent Application Laid-open No. 8-323937 proposes arranging a protective layer made of a polyolefin resin such as a linear low density polyethylene, a high density polyethylene and the like in which a coefficient of static friction at 110°C is equal to or less than 0.1 in an outer side of the oriented PA.

In other words, this technique intends to apply a resistance against a repeated bending, apply a resistance force against a friction to a cardboard, and prevent an acute angle portion in a folded portion and a corner portion from sticking the adjacent bag so as to be ruptured due to a buffering effect of the protective layer, on the basis of the protective layer made of the polyolefin resin. Further, since the oriented PA is excellent in a slip performance and a thickness uniformity, the oriented PA is frequently employed as the base material of the bag-making filling and closing bag.

However, the problem of the pinhole is taken a close-up in an intended use of a heavy material and a low temperature distribution, and the problem can be improved to some degree by arranging the polyolefin protective layer in the outer side as mentioned above, however, the pinhole resistance of the base material itself can not be improved, and a practical problem can not be solved as was before.

The present invention can solve the conventional problem mentioned above. In other words, and an object of the present invention is to provide a multiple bag in which it is possible to set every two supply systems of a multiple film to one system so as to simplify an apparatus by supplying a multiple film in which both side end edges parallel to an extruding direction of each of the films are connected with each other, such as a two-ply film obtained by forming a tubular film in a flat shape, to a producing step of a multiple bag, and a high quality can be obtained without applying a displacement preventing means between the multiple films in the film supplying step, a producing method of the same and a multiple bag for filling and closing a bag-making.

In this case, a packing body formed by sealing peripheral end portions of an upper film and a lower film is disclosed in Japanese Patent Application Laid-open No. 2000-185743. Further, a packing body constituted by an inner layer, an intermediate layer and an outer layer and using a tubular film for the inner layer and a sheet-like film for the intermediate layer and the outer layer respectively is disclosed in Japanese Patent Application Laid-open No. 8-301296. Further, a rolled film for multiple packing is disclosed in Japanese Patent Application Laid-open No. 9-254301. Further, a packing body in which a film forming a packing body is constituted by a two-ply film is disclosed in Japanese Patent Application Laid-open No. 9-294530. Further, a filling and closing multiple bag producing apparatus is disclosed in Japanese Patent Application Laid-open No. 10-35602. Further, a packing body formed by a two-ply film obtained by overlapping an inner film and an outer film in two sheets, and a producing method of the same are disclosed in Japanese Patent Application Laid-open No. 2003-26234.

However, the known publications neither discloses anything about the technique in accordance with the present invention, nor pay attention thereto.

### Disclosure of the Invention

In order to achieve the technical object mentioned above, in accordance with a first aspect of the present invention, there is provided a multiple bag structured by sealing a portion in which a multiple film formed by overlapping at least an inner film and an outer film is bent in a tubular shape and is overlapped, wherein each of the films of the multiple film structuring the multiple bag is connected with each other in both side end edges thereof.

In accordance with the structure mentioned above, since the multiple film in which both side end edges parallel to the extruding direction of each of the films are connected with each other is supplied in a producing step of the multiple bag, it is possible to set every two supply systems of the multiple film to one system so as to simplify the apparatus. Further, it is possible to obtain the multiple bag having a high quality without applying the displacement preventing means between the multiple films in the film supplying step.

Further, in accordance with a second aspect of the present invention, there is provided a multiple bag as recited in the first aspect, wherein the multiple film structuring the multiple bag is constituted by a multiple film obtained by forming a tubular film in a flat shape so as to form a two-ply film and connecting both side end edges thereof to each other.

In accordance with the structure mentioned above, since the multiple film in which the tubular film is formed in the flat shape so as to form the two-ply film and both side end edges parallel to the extruding direction of each of the films are connected with each other is supplied in a producing step of the multiple bag, it is possible to set every two supply systems of the multiple film to one system so as to simplify the apparatus.

Further, in accordance with a third aspect of the present invention, there is provided a multiple bag as recited in the first or second aspect, wherein two opposing films of the tubular film are set as an inner film and an outer film, a back lining seal portion is structured by welding a portion near both sides of the connected end edges of the film and the outer l'ilm, and a lateral seal portion is structured by welding a portion near both sides of the end edge in which the inner film and the outer film are not connected.

In accordance with the structure mentioned above, there is provided the aspect in which both side end edges of the inner film and the outer film of the multiple bag are connected to each other, and all of the end surface sides in the back seal portion are closed. Accordingly, no film peeling is generated in the back seal portion.

Further, in accordance with a fourth aspect of the present invention, there is provided a multiple bag as recited in the first or second aspect, wherein the end edges of the tubular bent multiple film are overlapped with each other in a flat shape, and the overlapped portion is back sealed.

In accordance with the structure mentioned above, there is provided the aspect in which the end surface side of the back seal portion gets in the multiple bag in one end side and gets out of the multiple bag in the other end side, however, all of the end surface sides of the back seal portion are closed in the bag shape. Accordingly, no film peeling is generated in the back seal portion.

Further, in accordance with a fifth aspect of the present invention, there is provided a multiple bag as recited in the first, second, third or fourth aspect, wherein a plug body mounting hole is formed in a step of bending the multiple film in the tubular shape, and a plug body is provided in the plug body mounting hole in accordance with a welding process.

In accordance with the structure mentioned above, the multiple bag integrally provided with the plug body is obtained.

Further, in accordance with a sixth aspect of the present invention, there is provided a multiple bag as recited in the first or second aspect, wherein the portion formed by bending the multiple film in the tubular shape and overlapping the multiple film is formed in one side end edge of the multiple bag, and a plug body is held in an inner side of the overlapped portion.

In accordance with the structure mentioned above, the multiple bag integrally provided with the plug body is obtained.

Further, in accordance with a seventh aspect of the present invention, there is provided a multiple bag structured by overlapping a multiple film formed by overlapping at least an inner film and an outer film in a two-fold shape and sealing both end portions, wherein the multiple film structuring the multiple bag is overlapped in a two-fold shape such that both side end edges in which the respective films are connected to each other are in the same side, and both end edge sides in which the respective films of the multiple film are connected to each other form an open side of the bag.

In accordance with the structure mentioned above, since the multiple film in which both side end edges parallel to the extruding direction of each of the films are connected with each other is supplied in a producing step of the multiple bag, it is possible to set every two supply systems of the multiple film to one system so as to simplify the apparatus. Further, it is possible to obtain the multiple bag having a high quality without applying the displacement preventing means between the multiple films in the film supplying step.

Further, in accordance with an eighth aspect of the present invention, there is provided a multiple bag as recited in the seventh aspect, wherein the multiple film structuring the multiple bag is constituted by a multiple film obtained by forming a tubular film in a flat shape so as to form a two-ply film and connecting both side end edges thereof to each other.

In accordance with the structure mentioned above, since the multiple film in which the tubular film is formed in the flat shape so as to form the two-ply film and both side end edges parallel to the extruding direction of each of the films are connected with each other is supplied in a producing step of the multiple bag, it is possible to set every two supply systems of the multiple film to one system so as to simplify the apparatus.

Further, in accordance with a ninth aspect of the present invention, there is provided a method of producing a multiple bag structured by sealing a portion in which a multiple film formed by overlapping at least an inner film and an outer film is bent in a tubular shape and is overlapped, wherein the multiple film is formed in accordance with an inflation method or a T-die extruding method so as to be sequentially overlapped by extruding, and bonding both side end edges parallel to the extruding direction of each of the overlapped films in accordance with a welding means, a bonding means or the like so as to form a multiple film connected to each other, and the multiple bag is structured by sealing the portion in which the multiple film is bent in the tubular shape and overlapped.

In accordance with the structure mentioned above, since it is possible to supply the multiple film in which both side end edges parallel to the extruding direction of each of the films are connected with each other, such as the structure in which the tubular film is formed in the flat shape so as to form the two-ply film, in the producing step of the multiple bag, it is possible to set every two supply systems of the multiple film to one system so as to simplify the apparatus. Further, the multiple bag having a high quality can be obtained without applying the displacement preventing means between the multiple films in the film supplying step.

Further, in accordance with a tenth aspect of the present invention, there is provided a method of producing a multiple bag structured by sealing a portion in which a multiple film formed by overlapping at least an inner film and an outer film is bent in a tubular shape and is overlapped, wherein the multiple film is structured by forming a tubular film in accordance with an inflation method so as to be sequentially extrude, forming the extruded tubular film in a flat shape so as to form a two-ply film, forming a multiple film in which both side end edges parallel to the extruding direction are connected to each other, and sealing the portion in which the multiple film is bent in the tubular shape and overlapped.

In accordance with the structure mentioned above, since it is possible to supply the multiple film in which both side end edges parallel to the extruding direction of each of the films are connected with each other, such as the structure in which the tubular film is formed in the flat shape so as to form the two-ply film, in the producing step of the multiple bag, it is possible to set every two supply systems of the multiple film to one system so as to simplify the apparatus. Further, the multiple bag having a high quality can be obtained without applying the displacement preventing means between the multiple films in the film supplying step.

Further, in accordance with an eleventh aspect of the present invention, there is provided a multiple bag for filling and closing a bag-making, in which a tubular is structured in a flat shape such that two opposing films form an inner film and an outer film, a back lining seal portion is structured by welding a portion near both sides of the end edges in which the inner film and the outer film are connected, and a lateral seal portion is structured by welding a portion near both sides of the end edges in which the inner film and the outer film are not connected, wherein the tubular film is constituted by a tubular co-extrusion inflation film having a polyolefin layer in both sides of a core layer.

In accordance with the structure mentioned above, the seal portion is not extremely collapsed so as to be formed extremely thin. Accordingly, the edge is not generated in a boundary portion between the seal portion and the adjacent film portion. Further, it is possible to maintain a film rigidity at a time of filling and closing the bag-making, and it is possible to widely improve a seal performance in comparison with the conventional structure.

Further, in accordance with a twelfth aspect of the present invention, there is provided a multiple bag for filling and closing a bag-making, in which a tubular is structured in a flat shape such that two opposing films form an inner film and an outer film, a back lining seal portion is structured by welding a portion near both sides of the end edges in which the inner film and the outer film are connected, and a lateral seal portion is structured by welding a portion near both sides of the end edges in which the inner film and the outer film are not connected, wherein the tubular film is constituted by a tubular co-extrusion inflation film having a polyolefin layer in both sides of a un-oriented polyamide layer.

In accordance with the structure mentioned above, an excellent pinhole resistance is obtained in comparison with the conventional structure in which the oriented polyamide film is the base material. Further, it is possible to satisfy a bag-making filling and closing property, it is possible to maintain a slip performance and a rigidity of the bag surface and it is possible to improve a seal performance.

### Brief Description of the Drawings

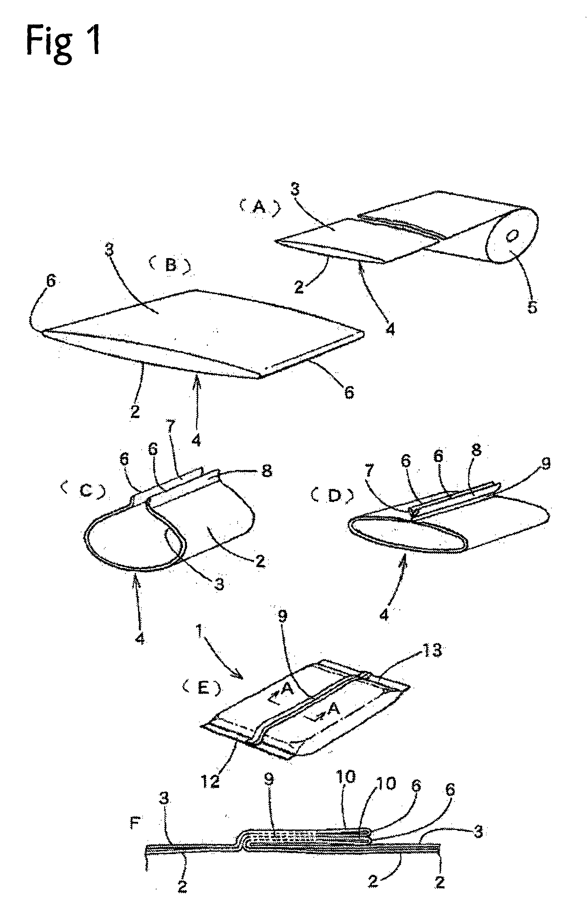

Figs. 1A to 1F show a producing step of a multiple bag in accordance with an embodiment of the present invention, in which Fig. 1A is a perspective view of a supply aspect of a multiple film to the producing step of the multiple bag, Fig. 1B is a perspective view of details of the multiple film shown in Fig. 1A, Fig. 1C is a perspective view of an aspect of bending the multiple film in a tubular shape in the producing step of the multiple bag, Fig. 1D is a perspective view of an aspect of back sealing a portion which is overlapped in the step in Fig. 1C, Fig. 1E is a perspective view of an aspect of sealing an end surface of one end side from the step in Fig. 1D, and thereafter receiving a received material so as to apply an end surface seal in the other end side, and Fig. 1F is a cross sectional view of details in a direction of an arrow A-A in Fig. 1E;

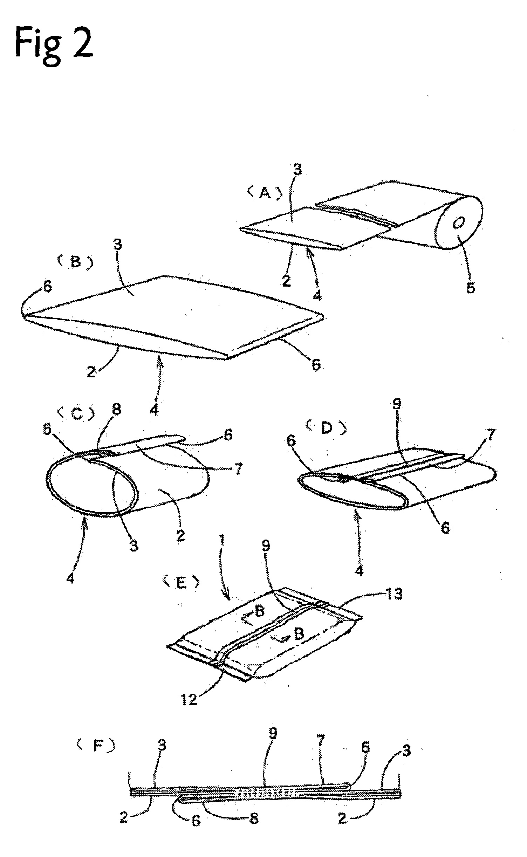

Figs. 2A to 2F show a producing step of a multiple bag in accordance with the other embodiment of the present invention, in which Fig. 2A is a perspective view of a supply aspect of a multiple film to the producing step of the multiple bag, Fig. 2B is a perspective view of details of the multiple film shown in Fig. 2A, Fig. 2C is a perspective view of an aspect of bending the multiple film in a tubular shape in the producing step of the multiple bag, Fig. 2D is a perspective view of an aspect of back sealing a portion which is overlapped in the step in Fig. 2C, Fig. 2E is a perspective view of an aspect of sealing an end surface of one end side from the step in Fig. 2D, and thereafter receiving a received material so as to apply an end surface seal in the other end side, and Fig. 2F is a cross sectional view of details in a direction of an arrow B-B in Fig. 2E;

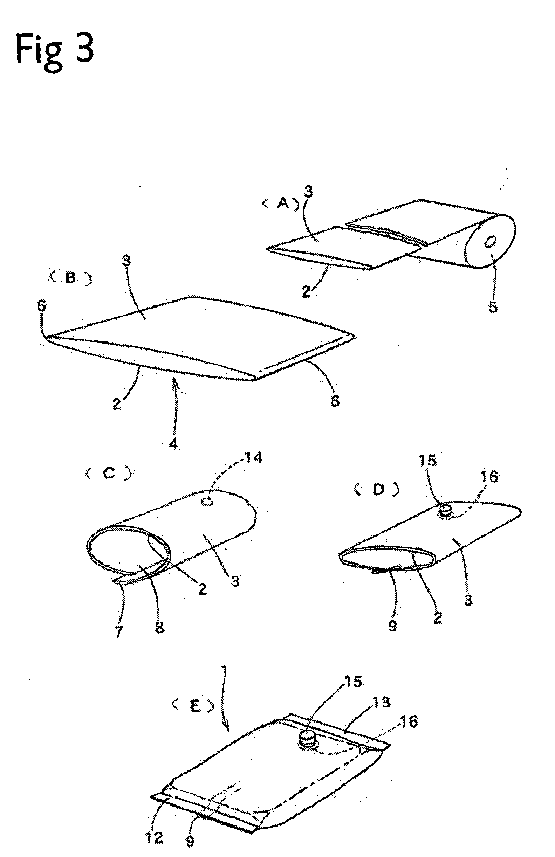

Figs. 3A to 3E show a producing step of a multiple bag in accordance with further the other embodiment of the present invention, in which Fig. 3A is a perspective view of a supply aspect of a multiple film to the producing step of the multiple bag, Fig. 3B is a perspective view of details of the multiple film shown in Fig. 3A, Fig. 3C is a perspective view of an aspect of bending the multiple film in a tubular shape in the producing step of the multiple bag, Fig. 3D is a perspective view of an aspect of back sealing a portion which is overlapped in the step in Fig. 3C, and Fig. 3E is a perspective view of an aspect of sealing an end surface of one end side from the step in Fig. 3D, and thereafter receiving a received material so as to apply an end surface seal in the other end side;

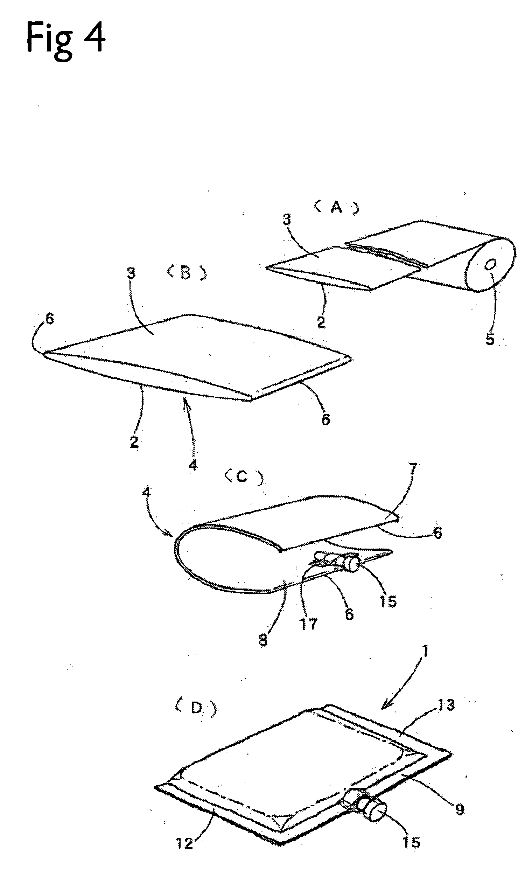

Figs. 4A to 4D show a producing step of a multiple bag in accordance with further the other embodiment of the present invention, in which Fig. 4A is a perspective view of a supply aspect of a multiple film to the producing step of the multiple bag, Fig. 4B is a perspective view of details of the multiple film shown in Fig. 4A, Fig. 4C is a perspective view showing an aspect of bending the multiple film in a tubular shape so as to form an overlapping portion in one side end edge of the multiple bag in the producing step of the multiple bag, and holding a plug body 15 in an inner side of the overlapping portion, and Fig. 4D is a perspective view of an aspect of surface sealing three surfaces comprising a portion which is overlapped in the step in Fig. 4C, one end side and the other end side so as to structure the multiple bag;

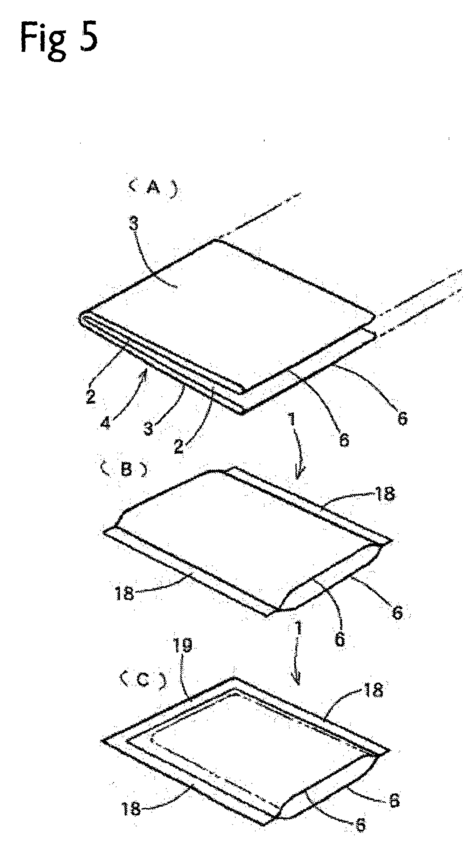

Figs. 5A to 5C show the other embodiment of a multiple bag in accordance with the present invention, in which Fig. 5A is a perspective view showing an aspect of the multiple film, Fig. 5B is a perspective view of one example of the produced multiple bag, and Fig. 5C is a perspective view of the other example in the same manner; and

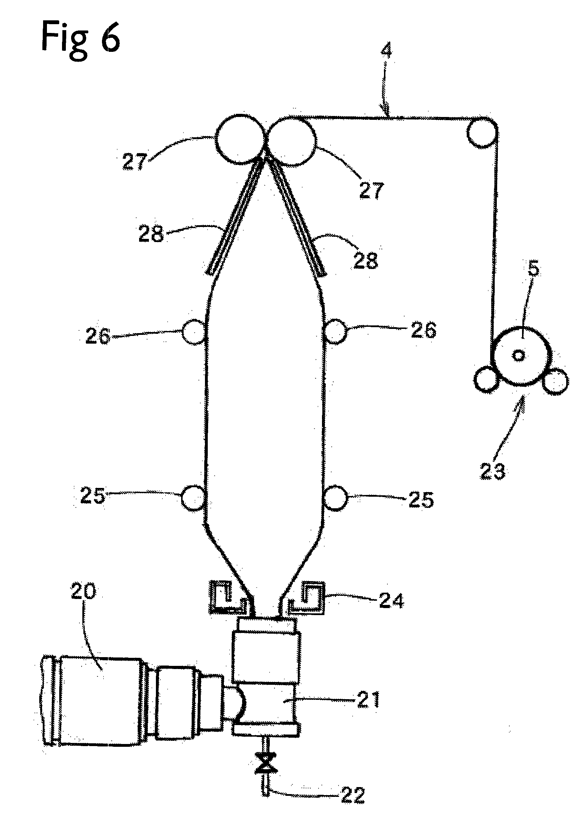

Fig. 6 is an explanatory view exemplifying an inflation method of obtaining the multiple film used in the multiple bag in accordance with the present invention.

### Best Mode for Carrying Out the Invention

In order to explain the present invention in more detail, a description will be given of the present invention with reference to the accompanying drawings.

Fig. 1 shows a producing step of a multiple bag in accordance with an embodiment of the present invention, in which Fig. 1A is a perspective view of a supply aspect of a multiple film to the producing step of the multiple bag, Fig. 1B is a perspective view of details of the multiple film shown in Fig. 1A, Fig. 1C is a perspective view of an aspect of bending the multiple film in a tubular shape in the producing step of the multiple bag, Fig. 1D is a perspective view of an aspect of back sealing a portion which is overlapped in the step in Fig. 1C, Fig. 1E is a perspective view of an aspect of sealing an end surface of one end side from the step in Fig. 1D, and thereafter receiving a received material so as to apply an end surface seal in the other end side, and Fig. 1F is a cross sectional view of details in a direction of an arrow A-A in Fig. 1E.

A multiple bag 1 in accordance with the present embodiment shown in Fig. 1 is structured by a multiple film 4 in which an inner film 2 and an outer film 3 are formed in a two-ply state. As shown in Fig. 1A, the multiple film 4 is supplied to a multiple bag producing step from a roll-like film 5 around which a tubular film is wound in a flat shape, in such a manner that the inner film 2 and the outer film 3 are overlapped in a two-ply state. Accordingly, the multiple film 4 supplied to the multiple bag producing step is structured such that both side end edges 6 and 6 of the inner film 2 and the outer film 3 parallel to an extruding direction thereof are connected with each other.

In the multiple bag producing step, the multiple film 4 supplied in the manner mentioned above is bent in a tubular shape such as a cylindrical shape or the like, and portions 7 and 8 overlapped in a rising manner by bending are back sealed in accordance with a welding process. Reference numeral 9 denotes a back seal portion. The back seal portion 9 gets out of the multiple bag 1 and is formed so as to be in contact with an outer surface of the outer film 3. In this case, since both side end edges 6 and 6 of the inner film 2 and the outer film 3 of the multiple film 4 are connected with each other, all of end surface sides 10 and 10 of the back seal portion 9 are formed in a bag-like closed aspect, as is apparent in Fig. 1F.

Next, the multiple film 4 back sealed in the manner mentioned above structures the multiple bag 1 in which one end side orthogonal to the extruding direction is sealed by an end surface and one end is open. Fig. 1E exemplifies a sealed packing body 11 in which a received material is received in the multiple bag and the other end side orthogonal to the extruding direction of the multiple film 4 is sealed by the end surface. In Fig. 1E, reference numeral 12 denotes an end surface seal portion in one end side, and reference numeral 13 denotes an end surface seal portion in the other end side.

Fig. 2 shows a producing step of a multiple bag in accordance with the other embodiment of the present invention, in which Fig. 2A is a perspective view of a supply aspect of a multiple film to the producing step of the multiple bag, Fig. 2B is a perspective view of details of the multiple film shown in Fig. 2A, Fig. 2C is a perspective view of an aspect of bending the multiple film in a tubular shape in the producing step of the multiple bag, Fig. 2D is a perspective view of an aspect of back sealing a portion which is overlapped in the step in Fig. 2C, Fig. 2E is a perspective view of an aspect of sealing an end surface of one end side from the step in Fig. 2D, and thereafter receiving a received material so as to apply an end surface seal in the other end side, and Fig. 2F is a cross sectional view of details in a direction of an arrow B-B in Fig. 2E.

In the embodiment shown in Fig. 2, the multiple bag is structured by overlapping the end edges of the tubular bent multiple film 4 with each other in a flat shape and back sealing the overlapped portion. Accordingly, as is apparent in Fig. 2F, there is provided an aspect in which one end side of the end surface side of the back seal portion 9 gets in the multiple bag 1 and the other end thereof gets out of the multiple bag 1, however, all of the end surface sides 10 and 10 of the back seal portion 9 are closed in a bag shape. In this case, since the other structures are the same as those of the embodiment shown in Fig. 1, the same reference numerals are attached to the same structure portions, and a description thereof will be omitted.

Fig. 3 shows a producing step of a multiple bag in accordance with further the other embodiment of the present invention, in which Fig. 3A is a perspective view of a supply aspect of a multiple film to the producing step of the multiple bag, Fig. 3B is a perspective view of details of the multiple film shown in Fig. 3A, Fig. 3C is a perspective view of an aspect of bending the multiple film in a tubular shape in the producing step of the multiple bag, Fig. 3D is a perspective view of an aspect of back sealing a portion which is overlapped in the step in Fig. 3C, and Fig. 3E is a perspective view of an aspect of sealing an end surface of one end side from the step in Fig. 3D, and thereafter receiving a received material so as to apply an end surface seal in the other end side.

The embodiment shown in Fig. 3 is structured such that a plug body mounting hole 14 is formed in an opposite surface to a side of the back seal portion 9 and a plug body 15 is provided, in the multiple bag 1 in accordance with the aspect shown in Fig. 2. In other words, the plug body mounting hole 14 is formed in a step of bending the multiple film 4 in a tubular shape as shown in Fig. 3C, and the plug body 15 is provided in the plug body mounting hole 14 by welding as shown in Fig. 3D. The plug body 15 has a flange 16 for securely welding to the multiple film 4. In this case, since the other structures are the same as those of the embodiment shown in Fig. 1, the same reference numerals are attached to the same structure portions, and a description thereof will be omitted.

Fig. 4 shows a producing step of a multiple bag in accordance with further the other embodiment of the present invention, in which Fig. 4A is a perspective view of a supply aspect of a multiple film to the producing step of the multiple bag, Fig. 4B is a perspective view of details of the multiple film shown in Fig. 4A, Fig. 4C is a perspective view showing an aspect of bending the multiple film in a tubular shape so as to form an overlapping portion in one side end edge of the multiple bag in the producing step of the multiple bag, and holding a plug body 15 in an inner side of the overlapping portion, and Fig. 4D is a perspective view of an aspect of surface sealing three surfaces comprising a portion which is overlapped in the step in Fig. 4C, one end side and the other end side so as to structure the multiple bag.

In the embodiment shown in Fig. 4, the plug body 15 is welded to one side end edge of the multiple bag 1, however, as shown in Fig. 4C, the plug body 15 is temporarily fastened to an inner side of the overlapped portion by an adhesive tape 17 in a step of bending the multiple film 4 in the tubular shape, and is welded in the surface sealing step shown in Fig. 4D. In this case, since the other structures are the same as those of the embodiment shown in Fig. 1, the same reference numerals are attached to the same structure portions, and a description thereof will be omitted.

The multiple bag in accordance with the present invention can be structured as shown in Fig. 5. In other words, the multiple film 4 is overlapped in a two-ply shape as shown in Fig. 5A, and one end side and the other end side of the multiple film 4 overlapped in the two-ply shape are respectively sealed by end surface as shown in Fig. 5B, whereby the respective films of the multiple film 4 make both the side end edges 6 and 6 connected with each other open. Reference numerals 18 and 18 denote an end surface seal portion. Further, as shown in Fig. 5C, the structure is made such as to further seal by end surface an open side and an opposite side end edge of the multiple film 4 overlapped in the two-ply shape. Reference numeral 19 denotes the end surface seal portion.

The multiple bag in accordance with the present invention is used as an inner bag of a bag in box in addition to being used as a simple substance. Further, the term "multiple" includes triple and fourfold in addition to double. As an example in which the multiple bag is used as a simple substance, there is a large-size bag receiving a content at 2 to 20 kg packing a liquid-state food such as sauce, ketchup, juice and the like. The multiple bag in accordance with the present invention is particularly preferable as a business oriented large-size packing bag stored and circulated in a frozen state or a cold state because the multiple bag is excellent in a pinhole resistance. The bag in box is structured in a container aspect by employing an inner bag which is formed by overlapping two or more films for receiving the liquid in an interior side and sealing by heat in a bag shape, employing a plastic container or a cardboard box provided with a rigidity sufficient for maintaining the shape in the transport and the storage in an exterior side, and combining the inner bag and the exterior side. The bag in box is widely used in a liquid-state food field such as juice, mineral water, soft drink, coffee, condiment, vegetable oil, sauce, ketchup, juice and the like particularly.

The multiple film used in the multiple bag in accordance with the present invention is obtained in accordance with an inflation method or a T-die extruding method. A film having a single layer or a multiple layer is obtained in accordance with the inflation method or the T-die extruding method. However, a co-extrusion is executed for obtaining the multiple layer film. In this case, the films can be combined and laminated in accordance with a dry laminate or an extrusion laminate.

It is preferable that the multiple film used in the multiple bag in accordance with the present invention is obtained in accordance with an inflation film method. In other words, because the inflation film is previously formed in the tubular shape, and can be used in an aspect as it is produced, it is not necessary to form the film in the tubular shape in accordance with the later step and no joint line is generated. In comparison with the inflation film method, it is necessary to cut both sides orthogonal to the extruding direction in the T-die extruding method. Further, while the inflation film can easily produce a thick film of about 60 µm to 150 µm, it is hard to produce the thick film in accordance with the T-die extruding method.

Fig. 6 is an explanatory view exemplifying the inflation method for obtaining the multiple film used in the multiple bag in accordance with the present invention. In Fig. 5, reference numeral 20 denotes an extruding machine, and reference numeral 21 denotes a die for inflation. A molten resin extruded in a tubular shape from the extruding machine 20 via the die 21 is inflated by an air supplied from an air supply pipe 22 in a process of being pulled up in a vertical direction, and is made flat while being cooled by air so as to be taken up by a take-up apparatus 23, whereby a roll-like film 5 in which the tubular film is wound in a flat shape is obtained. In Fig. 5, reference numeral 24 denotes an air ring for air cooling, reference numerals 25, 25, 26 and 26 denote a guide roller, and reference numerals 27 and 27 denote a pinch roll.

The present invention is characterized by structuring the multiple bag from the tubular film, however, it is most preferable that the tubular film is constituted by the inflation film as mentioned above. However, it is possible to the other films as far as the film is the tubular film. For example, the tubular shape can be obtained by welding both ends of two band-like films.

The structure of the preferable inflation film of the multiple bag in accordance with the present invention is as follows.

### <Single layer case>

LDPE simple substance
HDPE simple substance
PP simple substance

### <Multiple layer case (layer structure appears from outer side toward inner side)>

LDPE/LDPE
HDPE/LDPE
MDPE/LDPE
PP/LDPE
LDPE/HDPE/LDPE
LDPE/PA/LDPE
LDPE/MDPE/LDPE
LDPE/LDPE/LDPE
LDPE/EVOH/LDPE
In this case,
LDPE: low density polyethylene

(including linear low density polyethylene, straight chain low density polyethylene, very low density polyethylene)
HDPE: high density polyethylene
MDPE: middle density polyethylene
PA: polyamide
PP: polypropylene
EVOH: ethylene-vinyl acetate copolymer saponified material

### <Resin structuring innermost layer>

The resin structuring the innermost layer of the multiple bag employs the LDPE which is excellent in the heat seal performance, preferably a tough and strong LLDPE (straight chain low density polyethylene), and more preferably VLDPE (straight chain very low density polyethylene) produced by a single site (metallocene) catalyst which is controlled in a poly smell and is excellent in an elution resistance. In other words, since the LLDPE produced by a multi site catalyst such as Mg compound or Ti group has a wide molecular weight distribution while being excellent in a film workability, the LLDPE includes a lot of components in a low molecular weight region, which causes the poly smell and affects taste and odor of the content which is in contact with the film, and there is a hygienic problem due to transition (elusion) of the low molecular weight material. On the contrary, since the VLDPE produced by the single site catalyst has a narrow molecular weight distribution and a small amount of component in the low molecular weight region, it is possible to control the transition of the poly smell.

It is preferable that the multiple bag in accordance with the present invention is structured by the un-oriented film produced by the inflation method. In other words, in general, in the case of the three sided seal packaging bag having the back seal portion, four films are overlapped in a portion at which the back seal portion and the end surface seal portion cross, a pressure welding is not sufficiently executed in a boundary portion with the portion at which two adjacent films are overlapped, and a narrow tunnel-like unsealed portion tends to be generated. In particular, in the case of using the laminated film including the film having the rigidity such as a biaxial oriented nylon or the like and producing double film, the welding is avoided by the oriented film having the rigidity, and eight films are overlapped in the portion at which the back seal portion and the end surface seal portion cross, whereby a further narrow tunnel-like unsealed portion tends to be generated.

Accordingly, in the present invention, since the welding can be well executed to be comparatively soft by structuring by the un-oriented film of 60 µm to 140 µm produced by the inflation method of the polyethylene (including LD, LLDPE, VLDPE, HDPE and MDPE, and including the single layer and the multiple layer), it is possible to inhibit the pinhole from being generated in the unsealed portion, and it is possible to inhibit the pinhole from being generated at a time of conveying and circulating.

### (1) Demand characteristics of bag-making filling and closing bag

### (1-1) <Improvement of pinhole resistance>

In the case of the bag-making filling and closing bag, a solution of the pinhole resistance generates a great object. A detailed phenomenon is mentioned below. In the case of the bag-making filling and closing bag, the content of the liquid or the viscous body is filled in an upper side of the bag in the seal portion. When the seal bar is opened under this state, the center portion of the bag is going to expand due to its own weight of the content if the rigidity of the bag itself is deteriorated. Further, there is a problem that the film itself is extended and a seal failure is generated. As a result of various experiments executed by the inventors of the present invention, the following matters are known with regard to an origination condition of the pinhole and the seal performance and the like.

### (1-2) <Seal and pinhole>

A seal condition of the film is generally determined by setting a seal temperature, a pressurizing pressure and a seal time. Further, in the case of the bag-making filling and closing bag, it is necessary to set such a condition that the weld state is maintained even just after being sealed after filling the content. The set condition comes to a more severe condition in the case of the heavy bag and the high temperature filling. If it is intended to achieve a sufficient seal condition in correspondence thereto, the seal portion is extremely collapsed, that is, becomes thin, and the edge is generated in the boundary portion between the thin seal portion and the film portion which is adjacent to the seal portion. It is known that the edge causes the pinhole.

### (1-3) <Pinhole prevention by laminated film>

A preferable aspect in accordance with the present invention will be shown below. In other words, it is possible to prevent the seal portion from becoming extremely thin, it is possible to maintain the film rigidity at a time of filling and closing the bag-making, and it is possible to widely improve the seal performance, by using the tubular inflation film having the low density polyethylene layer (preferably, the linear low density polyethylene layer) having the thickness of 10 to 70 µm in both sides of the core layer (the resin layer selected from the un-oriented PA, EVOH, LDPE and HDPE) having the thickness of 7 to 30 µm. In particular, in the case that the core layer is constituted by the un-oriented PA, it is possible to obtain an excellent pinhole resistance in comparison with the oriented PA, it is possible to make a melting point higher than the polyolefin layer arranged in both sides, and it is possible to prevent the film from being extended at a time of sealing, whereby it is possible to obtain an improving effect of the seal performance and the pinhole resistance. In other words, the preferable aspect of the present invention is as follows.

### (1-4) <Structure of multiple bag for filling and closing bag-making>

A multiple bag for filling and closing a bag-making, in which a tubular is structured in a flat shape such that two opposing films form an inner film and an outer film, a back lining seal portion is structured by welding a portion near both sides of the end edges in which the inner film and the outer film are connected, and a lateral seal portion is structured by welding a portion near both sides of the end edges in which the inner film and the outer film are not connected, wherein the tubular film is constituted by a tubular co-extrusion inflation film having a polyolefin layer in both sides of a core layer.

### (1-5) <Effect of multiple bag for filling and closing bag-making>

In accordance with the structure mentioned above, the seal portion is not extremely collapsed so as to be formed extremely thin. Accordingly, the edge is not generated in a boundary portion between the seal portion and the adjacent film portion. Further, it is possible to maintain a film rigidity at a time of filling and closing the bag-making, and it is possible to widely improve a seal performance in comparison with the conventional structure.

### (1-6) <Further preferable example of multiple bag for filling and closing bag-making>

First, it is preferable in view of the pinhole resistance, the seal strength, the seal stability and the impact resisting bag rupture performance that the tubular film used in the multiple bag for filling and closing the bag-making is constituted by the tubular co-extrusion inflation film having the polyolefin layer having the thickness of 10 to 70 µm in both sides of the core layer having the thickness of 7 to 30 µm.

Secondly, in the case that the core layer is constituted by the resin layer selected from the un-oriented PA, EVOH and HDPE, it is possible to obtain the excellent pinhole resistance, it is possible to make the melting point higher than the polyolefin layer (preferably, the linear low density polyethylene layer) arranged in both sides, and it is possible to prevent the film from being extended at a time of sealing, whereby it is possible to obtain the improving effect of the seal performance and the pinhole resistance.

Thirdly, it is possible to improve the packing machine property and it is possible to prevent the blocking property between the inner surfaces of the bag-making filling and closing bag, by adding an anti-blocking material and/or a slip material to the inner and outer layers of the tubular film structuring the inner and outer surfaces of the inner film and the inner and outer surfaces of the outer film.

### (2-1) <Bag having PA as base material>

In this case, there has been known an aspect that the film for bag having the oriented PA as the base material employs the film obtained by laminating the thermal welding film having a comparatively low melting point such as the linear low density polyethylene or the like on the inner layer, the end portion of the film is thermally welded, and the bag-making is filled and closed while repeating the cutting process and the welding process. Further, in order to extend a retention cycle of the content, the PA obtained by further laminating a gas barrier film is sometimes employed as the base material.

### (2-2) <Relation between pinhole and lamination layer>

However, the bag-making filling and closing bag having the oriented PA as the base material has the problem that the pinhole tends to be generated due to the impact and the friction with the cardboard box in the circulating process, or the bending of the film or the like. Further, there is a tendency that the pinhole phenomenon is propagated to the other film even if the other film is laminated adjacently, whereby there is a problem that the leak of the content, the contamination of the content, and the bag rupture are generated. In other words, in the film obtained by laminating the gas barrier film such as the EVOH or the like on the oriented PA of the base material, the improvement of the rigidity of the lamination film causes the increase of the pinhole, and there is a case that the friction with the cardboard box for circulation, the projection portion in the corner of the bag, and the corner portion generated by the bending of the film stick to the bag so as to generate the bag rupture.

### (2-3) <Other induction reason of pinhole>

Further, with regard to the pinhole phenomenon mentioned above, in the case of the intended use in which it is requested to keep the low temperature in the process of the circulation and the storage, there is a problem that the rigidity of the laminated film is increased at a time of low temperature, whereby the pinhole phenomenon is increased, and in the case of the intended use in which the bag specification is provided for filling and closing the bag-making and the capacity is heavy such as 1 to 20 Kg, the problem tends to be particularly significantly generated, and it is requested that the bag-making filling and closing bag is improved.

### (2-4) <Countermeasure for improving pinhole>

As a countermeasure for improving the pinhole resistance of the bag-making filling and closing bag having the oriented PA as the base material, there is proposed arranging the protective layer made of the polyolefin resin such as the linear low density polyethylene, the high density polyethylene and the like in which the coefficient of static friction at 110°C is equal to or less than 0.1 in the outer side of the oriented PA (Japanese Patent Application Laid-open No. 8-323937).

This technique intends to apply the resistance against the repeated bending, apply the resistance force against the friction to the cardboard, and prevent the acute angle portion in the folded portion and the corner portion from sticking the adjacent bag so as to be ruptured due to the buffering effect of the protective layer, on the basis of the protective layer made of the polyolefin resin.

### (2-5) <Problem of technique mentioned above>

Since the oriented PA is excellent in the slip performance and the thickness uniformity, the oriented PA is frequently employed as the base material of the bag-making filling and closing bag. However, the problem of the pinhole is taken a close-up in the intended use of the heavy material and the low temperature distribution, and the problem can be improved to some degree by arranging the polyolefin protective layer in the outer side as mentioned above, however, the pinhole resistance of the base material itself can not be improved, and the practical problem can not be solved as was before.

### (2-6) <Attempt at employing un-oriented PA>

As mentioned above, the un-oriented PA is considered to be improper as the base material of the bag-making filling and closing bag in view of the general film selecting reason while the oriented PA is frequently employed as the base material of the bag-making filling and closing bag. In other words, since the un-oriented PA is inferior to the oriented PA in the slip performance, and a biased thickness tends to be generated, it is considered that there is a problem that the smooth supply of the film is prevented, that is, a problem that the machine property is inferior in the bag-making filling and packing machine.

### (2-7) <Relation between filling and seal>

The other reason why the un-oriented PA is considered to be improper as the base material of the bag-making filling and closing bag is a problem at a time of sealing. In other words, in the case of the bag-making filling and closing bag, when the content such as the liquid and the viscous body is filled in the upper side of the bag in the seal portion just after the lateral seal portion forming the bottom portion of the bag is welded by the seal bar, and the seal bar is opened under this state, there is a problem that the center portion of the bag is going to expend on the basis of its own weight of the content due to the lack of rigidity of the bag itself, the film itself is extended, and the seal failure is generated due to the biased thickness of the film itself. The problem mentioned above caused by using the un-oriented PA as the base material of the bag-making filling and closing bag is significantly generated particularly in the case of the heavy bag having the lateral seal width of the bag equal to or more than 300 mm, and the case of the high temperature filling equal to or more than 70°C. This matter is confirmed by the experiments of the inventors.

### (2-8) <Application of un-oriented PA in present invention>

Surprisingly, it has been known that the un-oriented PA which has been considered to be improper can be employed as the base material of the bag-making filling and closing bag, by using a specific means. It is possible to satisfy the bag-making filling and closing property, it is possible to maintain the slip performance of the bag surface and the rigidity thereof and it is possible to improve the seal performance, by using the tubular inflation film having the polyolefin layer (preferably, the linear low density polyethylene layer) having the thickness of 10 to 70 µm in both sides of the un-oriented PA layer having the thickness of 7 to 30 µm.

### (2-9) <Back seal and un-oriented PA film>

Further, in order to apply the un-oriented PA film, it is preferable to select the seal means. In the conventional bag-making filling and closing bag, there is generally employed a bag-making simultaneously filling and closing apparatus in which the back seal portion is structured by a so-called "butt seaming" of using the laminated film of the double layer structure in which the polyolefin seal layer is laminated in the inner side of the base material made of the oriented PA film, and welding the inner surfaces of the opposing films to each other as shown in Fig. 1. Because the polyolefin is not welded to the PA and the seal performance is not provided in a so-called "envelope seaming" of welding the inner surface of the other film on the outer surface of one film as shown in Fig. 2. It is intended to weld the back seal portion in accordance with the butt seaming which is conventionally used frequently, by using the un-oriented PA film, however, the problem is generated. In other words, in the case that it is intended to continuously seal in accordance with the butt seaming at a time when the film is applied to the bag-making filling and closing machine and the film passes through the former, a force pulling the film in the longitudinal direction is applied, and there is generated a problem that the film is extended in the longitudinal direction by the continuous seal and the pulling stress. However, it is known that that the back seal can be stably executed even by the un-oriented PA film, by arranging the polyolefin layer in both sides of the film and intermittently sealing in accordance with the envelop seaming.

### (2-10) <Other structure of multiple bag for bag-making filling and closing>

A multiple bag for filling and closing a bag-making, in which a tubular is structured in a flat shape such that two opposing films form an inner film and an outer film, a back lining seal portion is structured by welding a portion near both sides of the end edges in which the inner film and the outer film are connected, and a lateral seal portion is structured by welding a portion near both sides of the end edges in which the inner film and the outer film are not connected, wherein the tubular film is constituted by a tubular co-extrusion inflation film having a polyolefin layer in both sides of an un-oriented polyamide layer.

### (2-11) <Effect of other multiple bag for filling and closing bag-making>

An excellent pinhole resistance is obtained in comparison with the conventional structure in which the oriented polyamide film is the base material. Further, it is possible to satisfy the bag-making filling and closing property, it is possible to maintain the slip performance and the rigidity of the bag surface and it is possible to improve the seal performance. In particular, in the case that the bag is the heavy bag and the lateral seal width of the bag is equal to or more than 300 mm, or in the case of filling at a high temperature equal to or more than 70°C, the effect can be preferably achieved.

### (2-12) <Further preferable example of other multiple bag for filling and closing bag-making>

First, in addition to the structure mentioned above, it is possible to improve the seal strength of the film by structuring the back seal portion in accordance with the envelop seaming, the film is not extended at a time of sealing the bag-making, and it is possible to apply a stable machine property.

Secondly, it is preferable in view of the pinhole resistance, the seal strength, the seal stability and the impact resisting bag rupture performance that the tubular film used in the multiple bag for filling and closing the bag-making is made of the tubular co-extrusion inflation film having the polyolefin layer having the thickness of 10 to 70 µm in both sides of the core layer having the thickness of 7 to 30 µm.

Thirdly, it is possible to improve the sealing performance and the pinhole resistance in correspondence to the heavy bag and the high temperature filling by constituting the polyolefin layer arranged in both sides by the linear low density polyethylene.

Fourthly, it is possible to improve the packing machine property and it is possible to prevent the blocking property between the inner surfaces of the bag-making filling and closing bag, by adding the anti-blocking material and/or the slip material to the inner and outer layers of the tubular film structuring the inner and outer surfaces of the inner film and the inner and outer surfaces of the outer film.

### (3) Experiment example

### (3-1) <Used film>

Membrane: inflation formed tubular film (F1 to F7)
Fold width of tubular film (F1 to F7): 1230 mm
Lateral width of band-like film (F8): 1230 mm
Length of whole cloth winding roll (F1 to F8): 1500 m

### (3-2) <Evaluation result of film and bag-making filling and closing bag used in experiment>

| Film | Layer structure | (A) | (B) | (C) |
|---|---|---|---|---|
| F1 | LL(20)/AD(3)/C-Ny(10)/AD(3)/LL( 20) | ⊙ | ⊙ | ⊙ |
| F2 | LL(20)/AD(3)/EVOH(7)/AD(3)/LL( 20) | ⊙ | ⊙ | Δ |
| F3 | LL(15)/AD(3)/C-Ny(10)/EVOH(10) /AD(3)/LL(1 5 ) | ⊙ | ⊙ | ○ |
| F4 | LL(20)/HDPE(20)/LL(20) | ○ | Δ | ○ |
| F5 | LL(20)/C4(30)/LL(20) | ○ | Δ | ○ |
| F6 | LL(20)/LD(20)/LL(20) | ○ | Δ | ○ |
| F7 | LL(60)[Single layer] | Δ | Δ | Δ |
| F8 | Dry laminate | ○ | ⊙ | × |
| (A):Seal strength | | | | |
| (B):Seal stability | | | | |
| (C):Impact resisting bag rupture performance | | | | |

### (3-3) <About evaluation method>

The seal strength in Table shows a result obtained by cutting the portion of the back seal portion in the produced bag and executing a tension test, a case that the seal strength is equal to or more than 70 N/15 mm is expressed by ⊙, a case that the strength is equal to or more than 50 N/15 mm is expressed by ○, a case that the seal strength less than 50 N/15 mm is rarely generated during a running test is expressed by Δ, and a case that the seal strength of most of the products is less than 50 N/15 mm during the running test is expressed by ×.

The seal stability in Table evaluates whether or not the improved seal performance can be maintained even if a certain degree of dispersion (within 3°C with respect to the set temperature) is generated in the seal temperature of the back seal portion and the lateral seal portion during the running test, and a case that no change is generated with respect to the dispersion is expressed by ⊙, a case that any change is not substantially generated is expressed by ○, a case that the seal strength is partly generated is expressed by Δ, and a case that the seal strength is extremely lowered is expressed by ×. The impact resisting bag rupture performance in Table is a means for evaluating the pinhole resistance. In other words, it is evaluated by totally determining a drop test and a vibration test. The drop test is executed by falling down from the height of 1.2 m above the concrete floor. The drop state is constituted by alternately executing a drop in a vertical direction (in a direction in which the lateral seal portion comes to a lower side) and a drop in a lateral direction (in a direction in which the back surface of the bag having no back seal comes to a lower side), and the generation of the pinhole and the leak state are checked.

The vibration is executed by using a vibration tester which is reciprocated at 170 times per minute with a lateral amplitude of 40 mm, and receiving four bag-making filling and closing bags produced by the specific film in the cardboard box, and vibrating the tester in the longitudinal direction of the cardboard box, and the generation of the pinhole and the leak state are checked in the same manner as the drop test. As a result of totally determining the drop test and the vibration test, a case that any problems are not generated at all is expressed by ⊙, a case that any problems are not generated in the substantial circulation and use is expressed by ○, a case that the pinhole and the leak phenomenon are partly generated is expressed by Δ, and a case that any improvement is practically required in the film structure and the bag-making filling and closing specification is expressed by ×.

### (3-4) <Description of used film>

Numerical values in parenthesis in the layer structure in Table 1 indicates the thickness [µm].

Reference symbol LL denotes a resin obtained by adding a micronized silica having an average grain diameter of 3.5 µm at 0.0015 wt% as the anti-blocking agent and an erucic acid amide at 0.03 wt% as the slip agent to the linear low density polyethylene having a density of 0.922 and Ml of 1.2. Reference symbol C-Ny denotes an un-oriented polyamide. Reference symbol C4 denotes an ethylene-α, olefin (C4) copolymer having a density of 0.924 and Ml of 1.0. Reference symbol EVOH denotes an ethylene-vinyl acetate copolymer saponified material having an ethylene content of 32 mol% and a saponification degree of 98%. Reference numeral AD denotes an adhesive polyolefin obtained by denaturing a maleic anhydride.

Reference symbol F8 denotes a comparative example. The comparative example is constituted by a laminated film obtained by dry laminating the LL (40) on one side (the inner layer forming the seal layer) of the film (15) formed by biaxial orienting the un-oriented polyamide film formed by the T-die in accordance with the after process. In this case, the back seal portion of the pillow (the three sided seal) is formed as the normal continuous butt seaming as shown in Fig. 1. On the contrary, the films F1 to F7 produce the pillow type bag structured as the envelop seaming as shown in Fig. 2.

### (3-5) <Condition of bag-making>

Bag size: transversal 600 mm × longitudinal 500 mm (outer shape size at a time of compressing empty bag)
Seal width: 20 mm (the back seaming seal portion is structured, as shown in Fig. 2, such that the lower surface of the inner film of the other end portion is lapped over the upper side of the outer film of one end portion, and is welded at a width of 20 mm along a center of the overlapped portion of the width 30 mm. Further, the lateral seal portion is welded at 20 mm of the film end portion.)
Filling and packing machine used in experiment bag-making simultaneous filling and packing machine "ONPACK-2000" manufactured by ORIHIRO
Filler: fruit juice
Filling weight: 7500 g

### Industrial Applicability

In the multiple bag, the manufacturing method and the multiple bag for filling and closing the bag-making in accordance with the present invention, since it is possible to supply the multiple film in which both side end edges parallel to the extruding direction of the respective films are connected with each other, such as the structure in which the tubular film is formed in the flat shape and in the two-ply film in the producing step of the multiple bag, it is possible intend to simplify the apparatus by setting every two supply systems of the multiple film to one system, thereby being useful. Further, it is possible to obtain the multiple bag having a high quality without applying the displacement preventing means between the multiple films in the film supplying step and it is possible to provide the producing method thereof, thereby being useful.

## Claims

1. A multiple bag structured by sealing a portion in which a multiple film formed by overlapping at least an inner film and an outer film is bent in a tubular shape and is overlapped, wherein each of the films of the multiple film structuring said multiple bag is connected with each other in both side end edges thereof.

2. A multiple bag as claimed in claim 1, wherein the multiple film structuring the multiple bag is constituted by a multiple film obtained by forming a tubular film in a flat shape so as to form a two-ply film and connecting both side end edges thereof to each other.

3. A multiple bag as claimed in claim 1 or 2, wherein two opposing films of the tubular film are set as an inner film and an outer film, a back lining seal portion is structured by welding a portion near both sides of the connected end edges of said film and the outer film, and a lateral seal portion is structured by welding a portion near both sides of the end edge in which said inner film and the outer film are not connected.

4. A multiple bag as claimed in claim 1 or 2, wherein the end edges of the tubular bent multiple film are overlapped with each other in a flat shape, and the overlapped portion is back sealed.

5. A multiple bag as claimed in claim 1, 2, 3 or 4, wherein a plug body mounting hole is formed in a step of bending the multiple film in the tubular shape, and a plug body is provided in the plug body mounting hole in accordance with a welding process.

6. A multiple bag as claimed in claim 1 or 2, wherein the portion formed by bending the multiple film in the tubular shape and overlapping the multiple film is formed in one side end edge of the multiple bag, and a plug body is held in an inner side of the overlapped portion.

7. A multiple bag structured by overlapping a multiple film formed by overlapping at least an inner film and an outer film in a two-fold shape and sealing both end portions, wherein the multiple film structuring said multiple bag is overlapped in a two-fold shape such that both side end edges in which the respective films are connected to each other are in the same side, and both end edge sides in which the respective films of the multiple film are connected to each other form an open side of the bag.

8. A multiple bag as claimed in claim 7, wherein the multiple film is constituted by a multiple film obtained by forming a tubular film in a flat shape so as to form a two-ply film and connecting both side end edges thereof to each other.

9. A method of producing a multiple bag structured by sealing a portion in which a multiple film formed by overlapping at least an inner film and an outer film is bent in a tubular shape and is overlapped, wherein the multiple film is formed in accordance with an inflation method or a T-die extruding method so as to be sequentially overlapped by extruding, and bonding both side end edges parallel to the extruding direction of each of the overlapped films in accordance with a welding means, a bonding means or the like so as to form a multiple film connected to each other, and the multiple bag is structured by sealing the portion in which the multiple film is bent in the tubular shape and overlapped.

10. A method of producing a multiple bag structured by sealing a portion in which a multiple film formed by overlapping at least an inner film and an outer film is bent in a tubular shape and is overlapped, wherein the multiple film is structured by forming a tubular film in accordance with an inflation method so as to be sequentially extrude, forming the extruded tubular film in a flat shape so as to form a two-ply film, forming a multiple film in which both side end edges parallel to the extruding direction are connected to each other, and sealing the portion in which the multiple film is bent in the tubular shape and overlapped.

11. A multiple bag for filling and closing a bag-making, in which a tubular is structured in a flat shape such that two opposing films form an inner film and an outer film, a back lining seal portion is structured by welding a portion near both sides of the end edges in which said inner film and the outer film are connected, and a lateral seal portion is structured by welding a portion near both sides of the end edges in which said inner film and the outer film are not connected, wherein said tubular film is constituted by a tubular co-extrusion inflation film having a polyolefin layer in both sides of a core layer.

12. A multiple bag for filling and closing a bag-making, in which a tubular is structured in a flat shape such that two opposing films form an inner film and an outer film, a back fining seal portion is structured by welding a portion near both sides of the end edges in which said inner film and the outer film are connected, and a lateral seal portion is structured by welding a portion near both sides of the end edges in which said inner film and the outer film are not connected, wherein said tubular film is constituted by a tubular co-extrusion inflation film having a polyolefin layer in both sides of a un-oriented polyamide layer.
